# EUROPEAN PATENT SPECIFICATION

(11) **EP 2 806 667 B1**
(45) Date of publication and mention of the grant of the patent: **05.04.2017**
(21) Application number: 12868352.1
(22) Date of filing: 12.04.2012
(51) Int. Cl.: H04W 4/14, H04W 4/22, H04L 29/06, H04L 12/58, H04L 9/08, H04W 12/06, H04W 12/10, H04L 9/32

(54) **MESSAGE FILTERING METHOD AND SYSTEM**
NACHRICHTENFILTERUNGSVERFAHREN UND SYSTEM
PROCÉDÉ ET SYSTÈME DE FILTRAGE DE MESSAGES

(30) Priority: 17.02.2012 CN 201210036815
(43) Date of publication of application: 26.11.2014
(73) Proprietor: ZTE Corporation, Shenzhen, Guangdong 518057 (CN)
(72) Inventor: TAO, Weicheng, Shenzhen Guangdong 518057 (CN); CHEN, Jun, Shenzhen Guangdong 518057 (CN); YAO, Lizhe, Shenzhen Guangdong 518057 (CN)
(74) Representative: Modiano, Micaela Nadia
(86) International application number: PCT/CN2012/073930
(87) International publication number: WO 2013/120317

(56) References cited:
- EP-A1- 2 081 339
- CN-A- 1 798 370
- CN-A- 101 030 856
- US-A1- 2003 033 533
- US-A1- 2005 125 667
- US-B1- 6 996 714

## Description

### TECHNICAL FIELD

The disclosure relates to communications and in particular to a message filtering method and system.

### BACKGROUND

Message plays an important role in our daily life and work, and people engages in social production activities according to messages. Thus, it is extremely important to verify the authenticity of a message and the legality of a message producer, especially, in a network environment, the verification on the authenticity of a message and the legality of a message producer can effectively avoid the loss caused by a spam message or a false message.

For existing spam message filtering mechanisms, the mainly adopted technical schemes are divided into the following types: a source address filtering scheme and a message content filtering scheme. The source address filtering scheme is typically realized by setting a to-be-filtered address library (number library) (like a blacklist) in advance, extracting the sender address of a message when the message is received, comparing the extracted sender address with the set to-be-filtered addresses, determining the message as a spam message if the sender address can be found in the to-be-filtered address library; this scheme is disadvantaged in that the scheme is invalid to a spam message from a sender address that is not stored in the to-be-filtered address library and that a receiver in a packet network is incapable of determining whether or not a point-to-point message from a message sender is a spam message or whether or not the message is true or false as the message sender can hide, fake or disguise his/her own address information easily. The message content filtering scheme is basically characterized in presetting a filtering rule library in which spam message characteristic information, for example, sensitive words or uncivilized words are stored. When a new message is received, the characteristics of the message are extracted and matched with the filtering rule library, or the similarity between the extracted characteristics and the filtering rule library is calculated, if the matching is passed, then the message is filtered, otherwise, the message is not filtered, alternatively, a similarity threshold is set, if the calculated similarity is higher than the similarity threshold, then the message is determined as a spam message, otherwise, the message is not determined as a spam message. The latter scheme is disadvantaged in that it is usually difficult to extract characteristics capable of representing a spam message due to a large number of synonyms in natural language and the irregularity of natural language.

None of the foregoing methods achieves an excellent spam message filtering effect or a message authenticity verification effect, especially, in a packet network or P2P network in which a sender can distribute a message using a disguised or faked legal message sender address; particularly, when there is an emergent message, a great loss will be caused if it cannot be determined whether or not the message is true and a faked emergent message cannot be filtered. For example, in a typical scenario where the government distributes emergent messages to the public, if a faker distributes a false emergent tsunami message in the disguise of a legal government organization to the public, then a panic will be caused, resulting in a disturbance and chaos.

Prior art is disclosed in documents US 2003/033533 A1, EP 2 081 339 A1, US 6 996 714 B1.

### SUMMARY

In view of this, the disclosure provides a method for verifying the authenticity of a message or filtering a message based on a sequence code according to claim 1. The method is especially applicable in a scenario where a receiver is capable of communicating with a sender via a mobile communication network and receiving/transmitting packet data from/to the sender via the Internet.
the technical schemes of the disclosure are provided as follows:
In an embodiment, a message filtering method includes:
   step A: performing, by a message server and a mobile network server, mutual authentication and performing a negotiation for a sequence code for message verification after the authentication;
   step B: transmitting, by the message server, a message to a terminal, wherein the message contains the sequence code;
   step C: transmitting, by the terminal, the sequence code in the message to the mobile network server;
   step D: determining, by the mobile network server, whether the sequence code received from the terminal is the same as that resulted by the negotiation between the mobile network server and the message server, and transmitting, by the mobile network server, a result of the determination to the terminal; and
   step E: presenting, by the terminal, the message for the user when the result of the determination indicates that the sequence code received from the terminal is the same as that resulted by the negotiation.

Preferably, the method includes: before the message server and the mobile network server perform the negotiation for the sequence code for message verification after the authentication, performing, by the message server and the mobile network server, a negotiation for a session key and performing the negotiation for the sequence code using the session key.

Preferably, the message server and the mobile network server store the session key separately; when transmitting the message to the terminal, the message server encrypts the sequence code using the session key, the terminal transmits the sequence code encrypted using the session key to the mobile network server, and the mobile network server decrypts the sequence code using the session key and then verifies the sequence code.

Preferably, the sequence code resulted by negotiation between the message server and the mobile network server comprises a set of sequence codes; and the message server and the mobile network server select a sequence code corresponding a current time window from the set of sequence codes and perform a corresponding operation using the sequence code corresponding to the current time window.

Preferably, after receiving the result of the determination from the mobile network server, the terminal stores the result of the determination and the corresponding sequence code; and after receiving a new message transmitted using the same sequence code, the terminal determines whether to present the message for the user according to the result of the determination stored.

Preferably, the terminal transmits the sequence code in the message to the mobile network server by extracting the sequence code from the message and transmitting the extracted sequence code to the mobile network server; or, directly transmitting the message containing the sequence code to the mobile network server; wherein when the terminal directly transmits the message containing the sequence code to the mobile network server, the mobile network server has to extract the sequence code from the message before performing the determination.

The disclosure also provides a message filtering system according to claim 6, including:
a message server configured to authenticate a mobile network server which in turn authenticates the message server, negotiate with the mobile network server for a sequence code for verifying a message after the authentication and send a message containing the sequence code to a terminal;
a terminal configured to receive the message from the message server, send the sequence code contained in the message to the mobile network server, receive the result of the verification on the sequence code fed back from the mobile network server and present the message to the user if the verification is past; and
a mobile network server configured to authenticate the message server, negotiate with the message server for a sequence code for verifying a message after the authentication, receive the sequence code from the terminal, determine whether or not the sequence code from the terminal is the same as that negotiated with the message server, feed back a verification result indicating the passing of the verification if the sequence codes are the same, or feed back a verification result indicating the failure of the verification if the sequence codes are different.

Preferably, the message server and the mobile network server also negotiate with each other for a session key and then negotiate with each other for the sequence code using the session key.

Preferably, the message server and the mobile network server store the session key separately; when transmitting the message to the terminal, the message server encrypts the sequence code using the session key, the terminal transmits the sequence code encrypted using the session key to the mobile network server, and the mobile network server decrypts the sequence code using the session key.

Preferably, the sequence code resulted by negotiation between the message server and the mobile network server includes a set of sequence codes; and the message server and the mobile network server select a sequence code corresponding to the current time window from the set of sequence codes and execute a corresponding operation using the sequence code corresponding to the current time window.

Preferably, after receiving the verification result from the mobile network server, the terminal further stores the verification result and a corresponding sequence code and determines whether or not to present a new message transmitted using the same sequence code to the user according to the stored verification result after receiving the new message.

Preferably, the terminal transmits the sequence code in the message to the mobile network server by extracting the sequence code from the message and transmitting the extracted sequence code to the mobile network server; or, directly transmitting the message containing the sequence code to the mobile network server; wherein when the terminal directly transmits the message containing the sequence code to the mobile network server, the mobile network server is configured to extract the sequence code from the message before performing the determination.

By generating a sequence code for verifying a message through the negotiation between a message server and a mobile network server and verifying the source of the message using the sequence code when the message is received by a terminal, the disclosure prevents a false message server from spreading false information to the terminal.

### BRIEF DESCRIPTION OF THE DRAWINGS

Fig. 1 is a flowchart illustrating a message filtering method according to an embodiment of the disclosure;
Fig. 2 is a schematic diagram illustrating the structure of a message filtering system according to an embodiment of the disclosure.

### DETAILED DESCRIPTION

The subject matter and the advantages of the disclosure will be more readily apparent from the following detailed description with reference to the accompanying drawings.

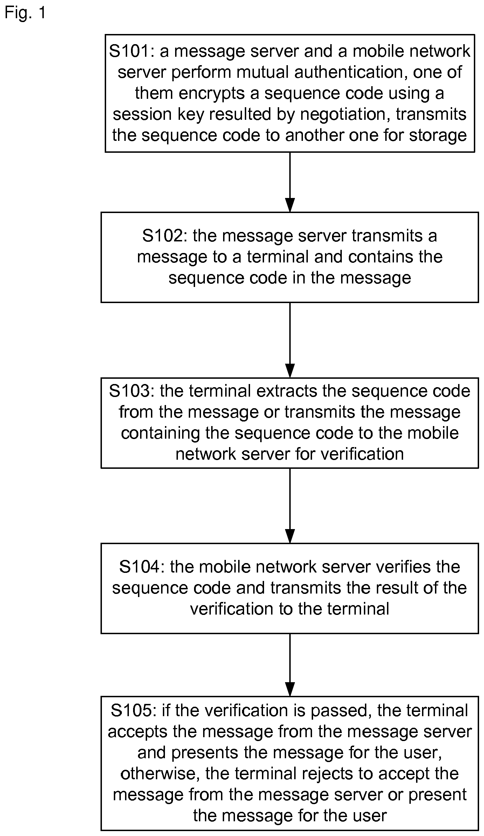

Fig. 1 is a flowchart illustrating a method for filtering a message based on a sequence code. The method includes the following steps.

At step S101, each of a message server and a mobile network server perform mutual authentication for one another using an existing technology, one of them encrypts a sequence code using a session key resulted by negotiation and transmits the sequence code to the other one for storage.

The authentication between the message server and the mobile network server may be performed using existing technologies, for example, PKI. After inquiring of each other for a certificate and passing the authentication, the message server and the mobile network server negotiate with each other for a session key and then negotiate with each other for a sequence code using the session key. The sequence code may be a random number, hash of a random number or a random unique sequence. The sequence code may be generated by either of the message server and the mobile network server and then transmitted to the other party or generated at both the message server and the mobile network server using a same algorithm, such as MD5, based on the same parameters; in the latter case, the sequence code is not transmitted between the message server and the mobile network server.

At step S102, the message server transmits a message to a terminal and contains the sequence in the message.

The sequence code may be transmitted separately from the message or may be contained in the message.

At step S103, the terminal extracts the sequence code from the message or transmits the message containing the sequence code to the mobile network server for verification.

The terminal may extract the sequence code from the message and then send the sequence code to the mobile network server or directly send the message containing the sequence code to the mobile network server; in the latter case, the mobile network server has to extract the sequence code from the message. As there is an existing authentication mechanism (e.g. A3 algorithm in GSM network) between a terminal (mobile phone in most cases) and a mobile network, the communication between the terminal and the mobile network is not started unless the terminal and the mobile terminal are mutually authenticated (e.g. a mobile phone is authenticated when powered on), and therefore, the communication is reliable and trustable.

At step S104, the mobile network server verifies the sequence code received or the sequence code extracted from the message received, that is, the mobile network server determines whether or not the sequence code from the terminal is the same as that resulted by negotiation with the message server, if so, that is, the verification is past, returns a verification success response to the terminal to instruct the terminal to accept the message from the message server and present the message for the user, otherwise, instructs the terminal not to accept the message from the message server or present the message for the user.

At step S105, if the verification is passed, the terminal accepts the message from the message server and presents the message for the user, otherwise, the terminal rejects to accept the message from the message server or present the message for the user.

As a faked message server does not get a sequence code which is the same as that resulted by negotiation with the mobile network server, the faked message server cannot be authenticated, thus preventing the faked message server from distributing a faked message and avoiding an unnecessary loss.

Compared with the existing filtering scheme based on a source address, this technical scheme is advantaged in that a faked message server, even capable of faking a source address, is incapable of faking a sequence code, and to say the least, even if capable of faking a sequence code, the faked message server is still incapable of faking a legal sequence code.

In the scheme above, in step S101, the message server and the mobile network server may further store a session key ; in Step S102, when the message server transmits the message, it contains the sequence code encrypted using the session key in the message ; in Step S103, the terminal directly transmits the encrypted sequence code to the mobile network server; and in the verification phase of Step S104, the mobile network server decrypts the encrypted sequence code using the session key stored and compares the decrypted sequence code with the sequence code stored, thus preventing attack of a malicious message server using an acquired sequence code.

Further, to defend against replay attacks, the message server and the mobile network server may negotiate with each other for a set of sequence codes, and selection of a sequence code from the set is controlled using a time window. In this way, even if the attacker intercepts a previous sequence code, the attacker cannot cause an attack. For example, a set of sequence codes are resulted in a negotiation phase and divided into several sections based on time, the message server transmits the sequence code corresponding to a time period T at time period T, similarly, after receiving the sequence code, the mobile network server compares the received sequence code with the sequence code corresponding to the current time period. Existing mechanisms may be employed to ensure time synchronization. Relevant literature documents may be referenced.

Further, after Step S104, after being authenticated by the mobile network server, the terminal may store the sequence code from the message server and the verification result of the mobile network server for subsequent message filtering. When a message is transmitted from the message server next time, the message may be filtered without participation of the mobile network server. Whether or not to accept the message can be determined by comparing the locally stored sequence code with that contained in the current message.

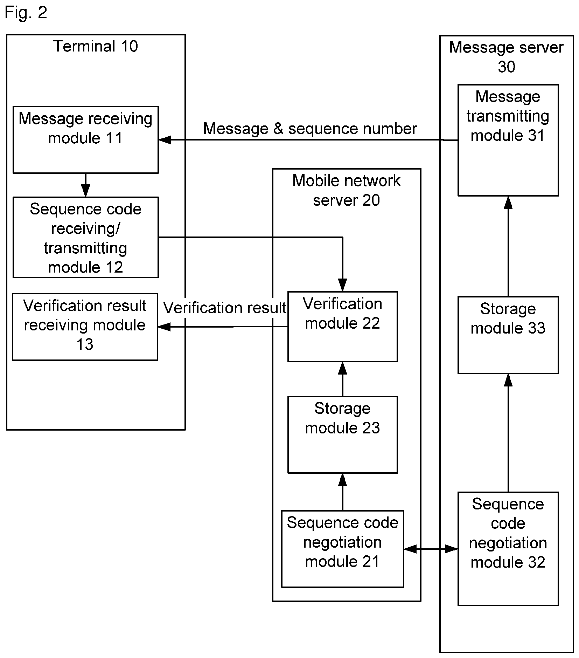

According to another aspect of the disclosure, a message filtering system is provided, including:a terminal 10, a mobile network server 20 and a message server 30, as shown in Fig. 2.

The terminal 10 has an independent communication function, a message receiving function and a verification result receiving function. The terminal 10 includes a message receiving module 11, a sequence code receiving/transmitting module 12 and a verification result receiving module 13.

The message receiving module 11 receives a message from the message server 30 after passing an authentication; the sequence code receiving/transmitting module 12 receives a sequence code from the message server 30 and transmits the sequence code to the mobile network server 20; and the verification result receiving module 13 receives a verification result from the mobile network server 20.

The mobile network server 20 serves for the terminal 10 and may be deployed in a mobile communication system such as a Mobile Switching Center (MSC) or a base station. The mobile network server 20 includes a first sequence code negotiation module 21, a verification module 22 and a storage module 23.

The first sequence code negotiation module 21 is configured to negotiate with the message server 30 on the sequence code. The verification module 22 is configured to receive the sequence code from the sequence code receiving/transmitting module 12 of the terminal and verifies the sequence code received with that resulted by negotiation with the message server 30 and issues a verification result to the terminal 10. The storage module 23 is configured to store the sequence code resulted by the negotiation with the message server 30.

The message server 30, which mainly distributes a message to the terminal 10, includes a message transmitting module 31, a second sequence code negotiation module 32 and optionally, includes a storage module 33.

The message transmitting module 31 transmits a message to the terminal 10; the second sequence code negotiation module 32 negotiates with the mobile network server 20 for a sequence code; and the storage module 33 stores the sequence code resulted by the negotiation with the mobile network server 20.

Further, the terminal may include a storage module configured to store the verification result and the sequence code for message filtering when the message filter 30 transmits a message next time.

### Embodiment 1

The negotiation of the message server (e.g. the National Disaster Warning Center) with the mobile network server (e.g. MSC) for a sequence code is described in the embodiment. The negotiation for the sequence code is contained out so that the server of the national disaster warning center can send an emergent message to all the mobile user terminals belonging to the mobile switching center when a disaster happens to notify the occurrence of the disaster and an emergency measure. The user terminal can filter a spam emergent message using the sequence code, and the specific authentication flow is as follows:
at step S31, the server of the national disaster warning center and the MSC verify the certificate of each other and negotiate with each other for a session key.

This step can be totally executed using an existing technology, the server of the national disaster warning center and the MSC authenticate the identity of each other through a Certificate Authority (CA) and negotiate with each other for a session key through a Public Key Infrastructure (PKI).

The server of the national disaster warning center generates a random number, generates a hash sequence by using the random number as a parameter, stores the hash sequence, encrypts the hash sequence using the session key and transmits the encrypted hash sequence to the MSC, and the MSC decrypts and stores the hash sequence.

The hash sequence can be generated using an existing technology such as MD5 or SHA.

As a faked disaster warning server has no hash sequence (sequence code) that is obtained through a negotiation with the server of the MSC, when the faked disaster warning server transmits a message to a terminal, the terminal which acquires no sequence code or no corresponding sequence code cannot extract the sequence code from the message received, as a consequence, the message cannot be verified and therefore filtered by the terminal.

### Embodiment 2

The following scenario is described in the embodiment: after a government organization or fire center obtains a message that a fire happens in a region, the government organization or fire center desires to distribute a fire message and a fire emergency plan to all the user terminals in the region to inform the user terminals of the occurrence of the fire and an emergency measure. After receiving the message, the user terminal verifies the source (fire center server) of the message before presenting the message for the user in order to prevent that the message is faked and then determines whether or not present the message for the user. The negotiation for the sequence code may be performed in the way described in embodiment 1, and the specific message filtering flow contained out in the scenario is as follows:
At step S41, the fire center server (the message server) transmits a fire alarm message to user terminals and carries the sequence code in the fire alarm message.
At step S42, the user terminals extract the sequence code from the fire alarm message, send the extracted sequence code to the MSC (the mobile network server) or directly send the fire alarm message containing the sequence code to the MSC.
At step S43, the MSC queries the sequence code resulted by the negotiation with the fire center server according to the sequence code from the user terminal or the sequence code extracted from the message, determines whether or not the sequence code from the terminal is the same as that resulted by negotiation with the local fire center server, if so, returns a verification success response to the terminal, otherwise, returns a verification failure response to the terminal.
At step S44, the terminals determine whether or not to filter the received fire message according to the verification result returned, present the fire message for the user if the verification is passed, or filter the fire message and reject to present the fire message for the user if the verification is not passed.

Further, the terminals may store the sequence code and the verification result for subsequent message filtering.

### Embodiment 3

The following scenario is described in the embodiment: after obtaining a message that a natural disaster happens in a region, a government organization or fire center desires to distribute a disaster message and an emergency plan to all the user terminals in the region to inform the user terminals of the occurrence of the natural disaster and an emergency measure. After receiving the message, the user terminal verifies the source of the message before presenting the message for the user in order to prevent that the message is faked and then determines whether or not present the message for the user. The negotiation for the sequence code may be performed in the way described in embodiment 1, the sequence code library stored in the terminal is on the basis of the sequence code library stored in previous message filtering, and the specific message filtering flow contained out in the scenario is as follows:
At step S51, the server of a disaster warning center (the message server) transmits a disaster message to a user terminal and carries the sequence code in the disaster message.
At step S52, the user terminal extracts the sequence code and compares the extracted sequence code with the stored sequence code library, if the extracted sequence code is found in the sequence code library, then the user terminal executes Step S53, otherwise, the user terminal executes Step S54.
At step S53, the user terminal queries a verification result (previous) corresponding to the sequence code, if the verification result is 'passed', then the user terminal presents the message for the user, otherwise, the user terminal filters the message and rejects to present the message for the user, and then the flow is ended.
At step S54, the terminal transmits the sequence code extracted to an MSC (the mobile network server);
At step S55, the MSC queries the sequence code resulted by negotiation with the server of the disaster warning center according to the sequence code from the user terminal and determines whether or not the received sequence code is the same as the locally stored one. If the received sequence code is the same as the locally stored one, the MSC returns a verification success response to the terminal, otherwise, that is, the verification is not passed, the MSC returns a verification failure response to the terminal.
At step S56, the terminal determines whether or not to filter the received disaster message according to the verification result returned, presents the disaster message for the user if the verification is past, or filters the disaster message and rejects to present the disaster message for the user if the verification is not passed.
At step S57, the terminal stores the sequence code and the verification result in the local sequence code library for subsequent message filtering.

The mentioned above is merely preferred embodiments of the disclosure but is not to be construed as limitation to the protection scope of the disclosure.

### INDUSTRIAL APPLICABILITY

By verifying the source of a received message using a sequence code, the disclosure prevents a false message server from spreading a false message to terminals.

## Claims

1. A message filtering method comprising:
step A: performing (S101), by a message server and a mobile network server, mutual authentication and performing a negotiation for a sequence code for message verification after the authentication;
step B: transmitting (S102), by the message server, a message to a terminal, wherein the message contains the sequence code;
step C: transmitting (S103), by the terminal, the sequence code in the message to the mobile network server;
step D: determining, by the mobile network server, whether the sequence code received from the terminal is the same as that resulted by the negotiation between the mobile network server and the message server, and transmitting (S104), by the mobile network server, a verification result of the determination to the terminal; and
step E: presenting (S105), by the terminal, the message for a user when the verification result of the determination indicates that the sequence code received from the terminal is the same as that resulted by the negotiation;
**characterised in that** : the transmitting, by the mobile network server, a result of the determination to the terminal, comprises: feeding, by the mobile network server, back a verification result indicating the verification is passed if the sequence codes are the same, or feeding, by the mobile network server, back a verification result indicating the verification is failed if the sequence codes are different from each other;
the sequence code resulted by the negotiation between the message server and the mobile network server comprises a set of sequence codes; and
wherein the message server and the mobile network server select a sequence code corresponding to a current time window from the set of sequence codes and perform a corresponding operation using the sequence code corresponding to the current time window.

2. The method according to claim 1, further comprising:
before the message server and the mobile network server perform the negotiation for the sequence code for message verification after the authentication,
performing, by the message server and the mobile network server, a negotiation for a session key and performing the negotiation for the sequence code using the session key.

3. The method according to claim 2,
wherein the message server and the mobile network server store the session key respectively, when transmitting the message to the terminal, the message server encrypts the sequence code using the session key; and
wherein the terminal transmits the sequence code encrypted using the session key to the mobile network server, and the mobile network server decrypts the sequence code using the session key and then verifies the sequence code.

4. The method according to claim 1,
wherein after receiving the verification result of the determination from the mobile network server, the terminal stores the verification result of the determination and the corresponding sequence code; and
wherein after receiving a new message transmitted using the same sequence code, the terminal determines whether to present the message for the user according to the verification result of the determination stored.

5. The method according to claim 1, wherein the transmitting, by the terminal, the sequence code in the message to the mobile network server comprises:
extracting, by the terminal, the sequence code from the message and transmitting the extracted sequence code to the mobile network server; or, directly transmitting, by the terminal, the message containing the sequence code to the mobile network server;
wherein when the terminal directly transmits the message containing the sequence code to the mobile network server, the mobile network server has to extract the sequence code from the message before performing the determination.

6. A message filtering system comprising:
a message server (30), configured to perform mutual authentication with a mobile network server, perform a negotiation with the mobile network server on a sequence code for message verification after the authentication and transmit a message containing the sequence code to a terminal;
a terminal (10), configured to receive the message from the message server, transmit the sequence code contained in the message to the mobile network server, receive a verification result on the sequence code fed back from the mobile network server and present the message for the user if the verification is passed; and
a mobile network server (20), configured to perform the mutual authentication with the message server, perform the negotiation with the mobile network server on the sequence code for message verification after the authentication, receive the sequence code from the terminal, determine whether the sequence code from the terminal is the same as that resulted by the negotiation with the message server, feed back a verification result indicating the verification is passed if the sequence codes are the same, or feed back a verification result indicating the verification is failed if the sequence codes are different from each other;
**characterised in that**:
the sequence code resulted by the negotiation between the message server and the mobile network server comprises a set of sequence codes; and
the message server and the mobile network server select a sequence code corresponding to a current time window from the set of sequence codes and perform a corresponding operation using the sequence code corresponding to the current time window.

7. The system according to claim 6, wherein the message server (30) and the mobile network server (20) are further configured to negotiate with each other for a session key and negotiate with each other for the sequence code using the session key.

8. The system according to claim 7,
wherein the message server (30) and the mobile network server (20) are further configured to store the session key respectively and encrypt the sequence code using the session key when the message server transmits the message to the terminal;
wherein the terminal (10) is configured to transmit the sequence code encrypted using the session key to the mobile network server; and
wherein the mobile network server (20) is further configured to decrypt the sequence code using the session key.

9. The system according to claim 6, wherein after receiving the verification result from the mobile network server, the terminal (10) further stores the verification result and a corresponding sequence code and determines whether or not to present a new message transmitted using the same sequence code to the user according to the stored verification result after receiving the new message.

10. The system according to claim 6,
wherein the terminal (10) transmits the sequence code in the message to the mobile network server (20) by extracting the sequence code from the message and transmitting the extracted sequence code to the mobile network server; or, directly transmitting the message containing the sequence code to the mobile network server;
wherein when the terminal (10) directly transmits the message containing the sequence code to the mobile network server (20), the mobile network server (20) has to extract the sequence code from the message before performing the determination.

## Patentansprüche

1. Ein Nachrichtenfilterungsverfahren, das Folgendes umfasst:
Schritt A: Durchführen (S101), durch einen Nachrichtenserver und einen Mobilfunknetzserver, gegenseitiger Authentifizierung und Durchführen einer Aushandlung bezüglich eines Sequenzcodes zur Nachrichtenüberprüfung nach der Authentifizierung;
Schritt B: Senden (S102), durch den Nachrichtenserver, einer Nachricht an ein Endgerät, wobei die Nachricht den Sequenzcode enthält;
Schritt C: Senden (S103), durch das Endgerät, des Sequenzcodes in der Nachricht an den Mobilfunknetzserver;
Schritt D: Ermitteln, durch den Mobilfunknetzserver, ob der vom Endgerät empfangene Sequenzcode identisch mit demjenigen ist, der aus der Aushandlung zwischen dem Mobilfunknetzserver und dem Nachrichtenserver resultiert, und Senden (S104), durch den Mobilfunknetzserver, eines Überprüfungsergebnisses der Ermittlung an das Endgerät; und
Schritt E: Darstellen (S105) der Nachricht gegenüber einem Nutzer durch das Endgerät, wenn das Überprüfungsergebnis der Ermittlung anzeigt, dass der vom Endgerät empfangene Sequenzcode identisch mit demjenigen ist, der aus der Aushandlung resultiert;
**dadurch gekennzeichnet, dass**
das Senden eines Ergebnisses der Ermittlung an das Endgerät durch den Mobilfunknetzserver Folgendes umfasst; das Rückmelden, durch den Mobilfunknetzserver, eines Überprüfungsergebnisses, das anzeigt, dass die Überprüfung bestanden wurde, wenn die Sequenzcodes identisch sind, oder das Rückmelden, durch den Mobilfunknetzserver, eines Überprüfungsergebnisses, das anzeigt, dass die Überprüfung nicht bestanden wurde, wenn die Sequenzcodes sich voneinander unterscheiden;
der Sequenzcode, der aus der Aushandlung zwischen dem Nachrichtenserver und dem Mobilfunknetzserver resultiert, einen Satz von Sequenzcodes umfasst; und
wobei der Nachrichtenserver und der Mobilfunknetzserver einen Sequenzcode aus dem Satz von Sequenzcodes auswählen, der einem aktuellen Zeitfenster entspricht, und mit Hilfe des Sequenzcodes, der dem aktuellen Zeitfenster entspricht, einen entsprechenden Programmschritt durchführen.

2. Das Verfahren gemäß Anspruch 1, das weiter Folgendes umfasst:
bevor der Nachrichtenserver und der Mobilfunknetzserver die Aushandlung bezüglich des Sequenzcodes zur Nachrichtenüberprüfung nach der Authentifizierung durchführen,
die Durchführung, durch den Nachrichtenserver und den Mobilfunknetzserver, einer Aushandlung bezüglich eines Sitzungsschlüssels, und die Durchführung der Aushandlung bezüglich des Sequenzcodes mit Hilfe des Sitzungsschlüssels.

3. Das Verfahren gemäß Anspruch 2,
wobei der Nachrichtenserver beziehungsweise der Mobilfunknetzserver den Sitzungsschlüssel speichern; beim Übertragen der Nachricht an das Endgerät verschlüsselt der Nachrichtenserver den Sequenzcode mit Hilfe des Sitzungsschlüssels; und
wobei das Endgerät den mit Hilfe des Sitzungsschlüssels verschlüsselten Sequenzcode an den Mobilfunknetzserver sendet und der Mobilfunknetzserver den Sequenzcode mit Hilfe des Sitzungsschlüssels entschlüsselt und den Sequenzcode dann überprüft.

4. Das Verfahren gemäß Anspruch 1,
wobei das Endgerät nach dem Empfang des Überprüfungsergebnisses der Ermittlung vom Mobilfunknetzserver das überprüfungsergebnis der Ermittlung und den dazugehörigen Sequenzcode speichert; und
wobei das Endgerät nach dem Empfang einer neuen Nachricht, die mit demselben Sequenzcode gesendet wurde, in Abhängigkeit von dem gespeicherten Überprüfungsergebnis der Ermittlung entscheidet, ob es die Nachricht dem Nutzer präsentiert.

5. Das Verfahren gemäß Anspruch 1, wobei das Senden des Sequenzcodes in der Nachricht an den Mobilfunknetzserver durch das Endgerät Folgendes umfasst:
Abfragen, durch das Endgerät, des Sequenzcodes von der Nachricht und Senden des abgefragten Sequenzcodes an den Mobilfunknetzserver; oder direktes Senden, durch das Endgerät, der Nachricht, die den Sequenzcode enthält, an den Mobilfunknetzserver;
wobei, wenn das Endgerät die Nachricht, die den Sequenzcode enthält, an den Mobilfunknetzserver sendet, der Mobilfunknetzserver den Sequenzcode vor Durchführung der Ermittlung von der Nachricht abfragen muss.

6. Ein Nachrichtenfilterungssystem, das Folgendes umfasst:
einen Nachrichtenserver (30), konfiguriert, um gegenseitige Authentifizierung mit einem Mobilfunknetzserver durchzuführen, eine Aushandlung mit dem Mobilfunknetzserver über einen Sequenzcode zur Nachrichtenüberprüfung nach der Authentifizierung durchzuführen und eine Nachricht, die den Sequenzcode enthält, an ein Endgerät zu senden;
ein Endgerät (10), konfiguriert, um die Nachricht vom Nachrichtenserver zu empfangen, den in der Nachricht enthaltenen Sequenzcode an den Mobilfunknetzserver zu senden, ein Überprüfungsergebnis zum Sequenzcode, das vom Mobilfunknetzserver zurückgeliefert wird, zu empfangen und die Nachricht dem Nutzer zu präsentieren, wenn die Überprüfung bestanden wird; und
einen Mobilfunknetzserver (20), konfiguriert, um die gegenseitige Authentifizierung mit dem Nachrichtenserver durchzuführen, die Aushandlung mit dem Mobilfunknetzserver über den Sequenzcode zur Nachrichtenüberprüfung nach der Authentifizierung durchzuführen, den Sequenzcode vom Endgerät zu empfangen, zu ermitteln, ob der Sequenzcode vom Endgerät mit demjenigen identisch ist, der aus der Aushandlung mit dem Nachrichtenserver resultiert, ein Überprüfungsergebnis zurückzuliefern, das anzeigt, dass die Überprüfung bestanden ist, wenn die Sequenzcodes identisch sind, oder ein Überprüfungsergebnis zurückzuliefern, das anzeigt, dass die Überprüfung nicht bestanden wurde, wenn die Sequenzcode sich voneinander unterscheiden;
**dadurch gekennzeichnet, dass**
der Sequenzcode, der aus der Aushandlung zwischen dem Nachrichtenserver und dem Mobilfunknetzserver resultiert, einen Satz von Sequenzcodes umfasst; und
der Nachrichtenserver und der Mobilfunknetzserver einen Sequenzcode aus dem Satz von Sequenzcodes auswählen, der einem aktuellen Zeitfenster entspricht, und mit Hilfe des Sequenzcodes, der dem aktuellen Zeitfenster entspricht, einen entsprechenden Programmschritt durchführen.

7. Das System gemäß Anspruch 6, wobei der Nachrichtenserver (30) und der Mobilfunknetzserver (20) weiter konfiguriert sind, um miteinander bezüglich eines Sitzungsschlüssels auszuhandeln und um miteinander mit Hilfe des Sitzungsschlüssels bezüglich des Sequenzcodes auszuhandeln.

8. Das System gemäß Anspruch 7,
wobei der Nachrichtenserver (30) und der Mobilfunknetzserver (20) weiter konfiguriert sind, um den Sitzungsschlüssel entsprechend zu speichern und den Sequenzcode mit Hilfe des Sitzungsschlüssels zu verschlüsseln, wenn der Nachrichtenserver die Nachricht an das Endgerät sendet;
wobei das Endgerät (10) konfiguriert ist, um den mit Hilfe des Sitzungsschlossels verschlüsselten Sequenzcode an den Mobilfunknetzserver zu senden; und
wobei der Mobilfunknetzserver (20) weiter konfiguriert ist, um den Sequenzcode mit Hilfe des Sitzungsschlüssels zu entschlüsseln.

9. Das System gemäß Anspruch 6, wobei das Endgerät (10) nach dem Empfang des Überprüfungsergebnisses vom Mobilfunknetzserver das Überprüfungsergebnis und einen dazugehörigen Sequenzcode weiter speichert und abhängig vom gespeicherten Überprüfungsergebnis nach dem Empfang einer neuen Nachricht, die mit demselben Sequenzcode gesendet wurde, entscheidet, ob die neue Nachricht dem Nutzer präsentiert wird oder nicht.

10. Das System gemäß Anspruch 6,
wobei das Endgerät (10) den Sequenzcode in der Nachricht an den Mobilfunknetzserver (20) sendet durch Abfragen des Sequenzcodes von der Nachricht und Senden des abgefragten Sequenzcodes an den Mobilfunknetzserver; oder durch direktes Senden der Nachricht, die den Sequenzcode enthält, an den Mobilfunknetzserver;
wobei, wenn das Endgerät (10) die Nachricht, die den Sequenzcode enthält, direkt an den Mobilfunknetznerver (20) sendet, der Mobilfunknetzserver (20) den Sequenzcode vor Durchführen der Ermittlung aus der Nachricht abfragen muss.

## Revendications

1. Procédé de filtrage de messages comprenant :
étape A : de réaliser (S101), par un serveur de messages et un serveur de réseau mobile, une authentification mutuelle et réaliser une négociation pour un code de séquence pour vérification de message après l'authentification ;
étape B : transmettre (S102), par le serveur de messages, un message à un terminal, dans lequel le message contient le code de séquence;
étape C : transmettre (S103), par le terminal, le code de séquence dans le message au serveur de réseau mobile ;
étape D ; déterminer, par le serveur de réseau mobile, si le code de séquence reçu depuis le terminal est le même que celui résultant de la négociation entre le serveur de réseau mobile et le serveur de messages, et transmettre (S104), par le serveur de réseau mobile, un résultat de vérification de la détermination au terminal ; et
étape E : présenter (S105), par le terminal, le message pour un utilisateur quand le résultat de vérification de la détermination indique que le code de séquence reçu depuis le terminal est le même que celui résultant de la négociation ;
**caractérisé en ce que** :
la transmission, par le serveur de réseau mobile, d'un résultat de la détermination au terminal, comprend ; de réalimenter, par le serveur de réseau mobile, un résultat de vérification indiquant que la vérification a réussi si les codes de séquence sont les mêmes, ou de réalimenter, par le serveur de réseau mobile, un résultat de vérification indiquant que la vérification a échoué si les codes de séquence sont différents l'un de l'autre ;
le code de séquence résultant de la négociation entre le serveur de messages et le serveur de réseau mobile comprend une série de codes de séquence ; et
dans lequel le serveur de messages et le serveur de réseau mobile sélectionnent un code de séquence correspondant à une fenêtre de temps courante parmi la série de codes de séquence et réalisent une opération correspondante en utilisant le code de séquence correspondant à la fenêtre de temps courante.

2. Procédé selon la revendication 1, comprenant en outre ; avant que le serveur de messages et le serveur de réseau mobile réalisant la négociation pour le code de séquence pour vérification de message après l'authentification,
réaliser, par le serveur de messages et le serveur de réseau mobile, une négociation pour une clé de session et réaliser la négociation pour le code de séquence en utilisant la clé de session.

3. Procédé selon la revendication 2,
dans lequel le serveur de messages et le serveur de réseau mobile stockent la clé de session respectivement, lors de la transmission du message au terminal, le serveur de messages encrypte le code de séquence en utilisant la clé de session ; et
dans lequel le terminal transmet le code de séquence encrypté en utilisant la clé de session au serveur de réseau mobile, et le serveur de réseau mobile décrypte le code de séquence en utilisant la clé de session et vérifie ensuite le code de sequence.

4. Procédé selon la revendication 1,
dans lequel après avoir reçu le résultat de vérification de la détermination depuis le serveur de réseau mobile, le terminal stocke le résultat de vérification de la détermination et le code de séquence correspondant ; et
dans lequel après avoir reçu un nouveau message transmis en utilisant le même code de séquence, le terminal détermine s'il faut présenter le message à l'utilisateur en fonction du résultat de vérification de la détermination stocké.

5. Procédé selon la revendication 1, dans lequel la transmission, par le terminal, du code de séquence dans le message au serveur de réseau mobile comprend :
d'extraire, par le terminal, le code de séquence du message et de transmettre le code de séquence extrait au serveur de réseau mobile ; ou, de transmettre directement, par le terminal, le message contenant le code de séquence au serveur de réseau mobile ;
dans lequel quand le terminal transmet directement le message contenant le code de séquence au serveur de réseau mobile, le serveur de réseau mobile doit extraire le code de séquence du message avant de réaliser la détermination.

6. Système de filtrage de messages comprenant :
un serveur de messages (30), configuré pour réaliser une authentification mutuelle avec un serveur de réseau mobile, réaliser une négociation avec le serveur de réseau mobile sur un code de séquence pour vérification de message après l'authentification et transmettre un message contenant le code de séquence à un terminal ;
un terminal (10), configuré pour recevoir le message depuis le serveur de messages, transmettre le code de séquence contenu dans le message au serveur de réseau mobile, recevoir un résultat de vérification sur le code de séquence réalimenté depuis le serveur de réseau mobile et présenter le message à l'utilisateur si la vérification a réussi ; et
un serveur de réseau mobile (20), configuré pour réaliser l'authentification mutuelle avec le serveur de messages, réaliser la négociation avec le serveur de réseau mobile sur le code de séquence pour vérification de message après l'authentification, recevoir le code de séquence depuis le terminal, déterminer si le code de séquence venant du terminal est le même que celui résultant de la négociation avec le serveur de messages, réalimenter un résultat de vérification indiquant que la vérification a réussi si les codes de séquence sont les mêmes, ou réalimenter un résultat de vérification indiquant que la vérification a échoué si les codes de séquence sont différents l'un de l'aütre ;
**caractérisé en ce que** ;
le code de séquence résultant de la négociation entre le serveur de messages et le serveur de réseau mobile comprend une série de codes de séquence ; et
le serveur de messages et le serveur de réseau mobile sélectionnent un code de séquence correspondant à une fenêtre de temps courante parmi la série de codes de séquence et réalisent une opération correspondante en utilisant le code de séquence correspondant à la fenêtre de temps courante,

7. Système selon la revendication 6, dans lequel le serveur de messages (30) et le serveur de réseau mobile (20) sont en outre configurés pour négocier ensemble pour une clé de session et négocier ensemble pour le code de séquence en utilisant la clé de session.

8. Système selon la revendication 7,
dans lequel le serveur de messages (30) et le serveur de réseau mobile (20) sont en outre configurés pour stocker la clé de session respectivement et encrypter le code de séquence en utilisant la clé de session quand le serveur de messages transmet le message au terminal ;
dans lequel le terminal (10) est configuré pour transmettre le code de séquence encrypté en utilisant la clé de session au serveur de réseau mobile ; et
dans lequel le serveur de réseau mobile (20) est en outre configuré pour décrypter le code de séquence en utilisant la clé de session.

9. Système selon la revendication 6, dans lequel après avoir reçu le résultat de vérification depuis le serveur de réseau mobile, le terminal (10) stocke en outre le résultat de vérification et un code de séquence correspondant et détermine s'il faut ou non présenter un nouveau message transmis en utilisant le même code de séquence à l'utilisateur selon le résultat de vérification stocké après réception du nouveau message.

10. Système selon la revendication 6,
dans lequel le terminal (10) transmet le code de séquence dans le message au serveur de réseau mobile (20) en extrayant le code de séquence du message et transmettant le code de séquence extrait au serveur de réseau mobile ; ou en transmettant directement le message contenant le code de séquence au serveur de réseau mobile ;
dans lequel quand le terminal (10) transmet directement le message contenant le code de séquence au serveur de réseau mobile (20), le serveur de réseau mobile (20) doit extraire le code de séquence du message avant de réaliser la détermination.
